# FASCICULE DE BREVET EUROPEEN

(11) **EP 2 129 002 B1**
(45) Date de publication et mention de la délivrance du brevet: **22.06.2011**
(21) Numéro de dépôt: 09305382.5
(22) Date de dépôt: 30.04.2009
(51) Int. Cl.: H04B 5/00, G06K 7/00, G06K 7/08, G06K 19/07

(54) **Dispositif, système et procédé de communication radiofréquence**
Vorrichtung, System und Verfahren zur Funkkommunikation
Device, system and method for radiofrequency communication

(30) Priorité: 26.05.2008 FR 0853410
(43) Date de publication de la demande: 02.12.2009
(73) Titulaire: Commissariat à l'Énergie Atomique et aux Énergies Alternatives, 75015 Paris (FR)
(72) Inventeur: Savry, Olivier, 38360 Sassenage (FR)
(74) Mandataire: Vuillermoz, Bruno

(56) Documents cités:
- WO-A-2008/091065
- GB-A- 2 422 517
- US-A1- 2007 246 546

## Description

### DOMAINE DE L'INVENTION

L'invention a trait au domaine de la communication radiofréquence sans contact, et plus particulièrement la communication radiofréquence par couplage inductif.

### ETAT ANTERIEUR DE LA TECHNIQUE

Un dispositif communiquant sans contact, comme cela est défini par les normes ISO 14443, ISO 1593 ou ISO 18000-X par exemple, comprend usuellement une antenne inductive formée d'un conducteur électrique formant une ou plusieurs boucles, connectée à un circuit intégré faisant varier la tension et/ou la charge aux bornes de l'antenne pour générer un champ magnétique modulé en amplitude ou en phase. Une communication peut ainsi s'établir avec un autre dispositif de ce type, placé dans la portée de communication du premier dispositif, en raison de la force électromotrice produite entre les antennes.

En intégrant une technologie de communication sans contact dans un appareil nomade, comme par exemple un téléphone mobile, un smartphone ou un assistant numérique personnel, des usages de cet appareil du type « carte sans contact » (paiement, billettique, couponing, contrôle d'accès...) ou du type « lecteur de carte sans contact »(lecture d'informations contenue dans des étiquettes électroniques RFID disposées dans la rue, sur des marchandises ou autres) sont possibles.

Toutefois, une lecture sans contact nécessite usuellement un minimum de 2 Watts pour communiquer dans la bande de 13,56 MHz avec des cartes sans contact satisfaisant à la norme ISO 14443 ou la norme ISO 15693 ou avec des étiquettes électroniques satisfaisant à la norme ISO 18000-X.

Une telle puissance rend ainsi l'intégration d'une telle fonction problématique dans un appareil nomade. En effet, sa mise en oeuvre induit une perte d'autonomie de l'appareil nomade ou bien un surdimensionnement de la source d'énergie de l'appareil pour compenser la surconsommation liée à la fonction de lecture sans contact.

Le document GB-A-2 422 517 décrit un dispositif de communication radiofréquence conforme au préambule de la revendication 1.

### EXPOSE DE L'INVENTION

Le but de la présente invention est de proposer un appareil nomade embarquant une fonction de lecture sans contact tout en maîtrisant la surconsommation d'énergie induite par une telle fonction.

A cet effet, l'invention a pour objet un dispositif de communication radiofréquence comportant une antenne inductive.

Selon l'invention, l'antenne est apte à établir un couplage réduit avec un émetteur d'un champ magnétique sensiblement homogène à l'échelle de celle-ci et apte à établir un couplage inductif fort avec un transpondeur placé à proximité du dispositif, et le dispositif comporte un circuit d'interrogation du transpondeur comprenant :
■ des moyens de prélèvement et de traitement du signal aux bornes de l'antenne aptes à produire en fonction de celui-ci un signal de référence;
■ des moyens de modulation aptes à moduler le signal de référence ; et
■ des moyens d'application aptes à appliquer le signal modulé aux bornes de l'antenne.

En d'autres termes, l'idée est d'utiliser une source extérieure d'énergie pour alimenter la fonction de lecteur sans contact, et plus particulièrement pour les opérations d'interrogation de la carte par le dispositif selon l'invention.

On sait qu'une carte sans contact ne comporte pas de source d'énergie interne. Pour se fournir en énergie, la carte comporte usuellement un redresseur connecté à son antenne et un filtre moyenneur. Ainsi, lorsque la carte est plongée dans un champ magnétique, comme celui d'un lecteur sans contact par exemple, une tension est produite aux bornes de l'antenne de celle-ci, cette tension étant alors redressée puis filtrée pour fournir une alimentation aux différents circuits électroniques présents sur la carte. La carte est donc téléalimentée au moyen de la source d'énergie externe que représente le champ magnétique produit par le lecteur sans contact.

Il pourrait ainsi être envisagé d'utiliser le même principe pour téléalimenter les circuits formant lecteur sans contact embarqués dans un appareil nomade. Par exemple, il existe déjà dans certains magasins de nombreux lecteurs sans contact pour la lecture d'étiquettes électroniques RFID permettant au consommateur de s'informer du prix des articles sur lequel sont apposées les étiquettes. Ce consommateur pourrait ainsi, à l'aide de son téléphone portable équipé d'une fonction de lecture sans contact, lire les étiquettes mais également profiter d'offres promotionnelles contenues dans une carte sans contact placée à proximité d'un lecteur.

Cependant en embarquant les composants classiques d'un lecteur dans un appareil nomade, il est difficile à la fois de téléalimenter ceux-ci à partir d'un autre lecteur sans contact classique et de communiquer avec une carte sans contact. En effet, le champ du lecteur sans contact utilisé comme source externe d'énergie se superpose au champ magnétique produit pour communiquer avec la carte. De fait, le champ magnétique du lecteur brouille le champ magnétique de la carte sans contact.

Or, on sait que le champ magnétique produit par le lecteur est sensiblement homogène hors du voisinage immédiat de son antenne compte tenu de la taille importante de cette dernière.

Ainsi, en concevant un appareil nomade conforme au dispositif selon l'invention, la composante du signal aux bornes de son antenne relative au champ du lecteur est réduite, voire nulle. En plaçant l'appareil nomade à proximité d'une carte sans contact, l'appareil ne voit donc que faiblement, ou sensiblement pas du tout, le champ magnétique du lecteur et l'appareil n'est pas parasité directement par le lecteur.

En accolant l'appareil nomade à la carte sans contact, un couplage inductif fort entre ceux-ci est crée. Comme la carte est également baignée dans le champ du lecteur, une force électromotrice est crée dans son antenne par le champ du lecteur. Cette force crée à son tour fort une force électromotrice dans l'antenne de l'appareil puisque ce dernier est fortement couplé à la carte.

Par ailleurs, et réciproquement, en imposant un signal de référence, éventuellement modulé, aux bornes de l'antenne du dispositif nomade, il est possible par couplage inductif d'appliquer un signal sensiblement proportionnel sur l'antenne de la carte. On crée ainsi au niveau de la carte l'équivalent d'un champ magnétique local capable de supprimer les éventuelles modulations du champ magnétique produit par le lecteur.

Ainsi, l'appareil nomade selon l'invention est capable d'émettre des commandes, en utilisant peu d'énergie, l'énergie utilisée pour faire fonctionner la fonction de lecture sans contact de l'appareil nomade provenant essentiellement, via la carte, du champ du lecteur. En effet, l'appareil nomade prélève le signal aux bornes de l'antenne, produit et module un signal de référence en fonction du signal prélevé essentiellement à l'aide de composants passifs et réinjecte le signal modulé sur l'antenne. Cette boucle de rétroaction ne fait appel à aucun composant de puissance pour amplifier et émettre un champ magnétique. La seule surconsommation induite est celle nécessaire à la commutation de composants et à la logique nécessaire pour décoder les messages de la carte ou pour coder les commandes à envoyer. Cette surconsommation est beaucoup plus faible que celle induite par l'émission d'un champ magnétique par un lecteur sans contact classique qui requiert un courant important.

On notera également qu'un appareil nomade selon l'invention n'empêche pas le lecteur de dialoguer avec d'autres cartes sans contact.

Selon un mode de réalisation particulier, l'antenne comporte un premier et un second enroulement connectés en série et tournant en sens inverse.

En d'autres termes, la connexion en série et l'inversion de sens des deux enroulements de l'antenne a pour effet que les forces électromotrices induites par le lecteur dans ceux-ci se soustraient, voire s'annulent si les surfaces des deux enroulements sont égales.

Selon un mode de réalisation particulier de l'invention, la surface du second enroulement est sensiblement égale à la surface du premier enroulement. Plus particulièrement, le second enroulement comprend une pluralité de boucles dont la surface de chacune est un sous-multiple de la surface du premier enroulement.

En d'autres termes, les forces électromotrices induites dans l'antenne du dispositif par un champ homogène s'annulent. En outre, le premier enroulement forme une grande surface qui voit essentiellement le champ d'une carte sans contact alors que le second enroulement voit essentiellement le champ du lecteur. Par ailleurs, en utilisant plusieurs boucles de faible surface comprises, et de préférence centrées, dans le premier enroulement, la soustraction de la composante du signal relatif à la carte est moindre, tout en ayant une annulation du champ du lecteur en raison de son homogénéité.

Selon un mode de réalisation particulier, les moyens de prélèvement et de traitement comprennent des moyens de redressement et de moyennage du signal aux bornes de l'antenne. Plus particulièrement, les moyens de redressement et de moyennage comprennent un redresseur connecté aux bornes de l'antenne, un détecteur d'enveloppe connecté en sortie du redresseur, et un moyenneur connecté en sortie du détecteur d'enveloppe.

En d'autres termes, comme le champ vu par l'antenne est usuellement une porteuse modulée, il est ainsi obtenu une référence servant de base à la modulation lors d'envoi de commande à la carte.

De manière avantageuse, les moyens de prélèvement et de traitement comprennent un premier multiplicateur par un premier gain prédéterminé inférieur à 1, connecté en sortie des moyens de redressement et de moyennage. De cette manière, le signal de référence obtenu est inférieur au niveau bas de la modulation de la porteuse reçue sur l'antenne, ce qui évite d'avoir des trous dans le signal de référence et permet d'être moins sensible à des interférences.

De manière avantageuse, les moyens de modulation comprennent un second multiplicateur par un second gain prédéterminé, connecté en sortie du circuit de prélèvement et de traitement, un premier interrupteur pilotable agencé entre les moyens de prélèvement et de traitement et l'antenne et un second interrupteur pilotable agencé entre le second multiplicateur et l'antenne.

En d'autres termes, le signal en sortie du circuit de prélèvement et de traitement forme le niveau haut de la modulation et le signal en sortie du second multiplicateur forme le niveau bas de la modulation. L'ouverture et la fermeture des premier et second interrupteurs permettent de choisir l'un ou l'autre de ces niveaux pour la modulation. Un dispositif de ce type est particulièrement adapté à une communication avec une carte du type B et un lecteur du type B de la norme ISO 14443.

En variante, les moyens de modulation comprennent un premier interrupteur pilotable agencé entre les moyens de prélèvement et de traitement et l'antenne et un condensateur apte à être connecté en parallèle de l'antenne au moyen d'un interrupteur pilotable

En d'autres termes, le signal en sortie du circuit de prélèvement et de traitement forme le niveau haut de la modulation et le niveau bas de la modulation est obtenu en branchant le condensateur aux bornes de l'antenne ce qui désaccorde celle-ci. Un dispositif de ce type est particulièrement adapté à une communication avec une carte du type A et un lecteur du type B de la norme ISO 14443.

Selon un mode de réalisation particulier de l'invention, les moyens de prélèvement et de traitement comprennent des moyens de comblement aptes à produire un signal de comblement des trous du signal prélevé aux bornes de l'antenne. Plus particulièrement, les moyens de comblement comprennent un oscillateur connecté à l'antenne et apte à générer un signal sinusoïdal de fréquence sensiblement égale à celle d'une porteuse reçue sur l'antenne et synchronisé sur celle-ci, un premier multiplicateur par un gain variable connecté en sortie de l'oscillateur et un circuit de pilotage du gain du multiplicateur apte à régler celui-ci sur une valeur non nulle lorsque le signal prélevé aux bornes de l'antenne présente un trou.

En d'autres termes, le dispositif selon l'invention est capable de construire un signal lorsque le signal aux bornes de l'antenne est absent, comme cela peut être le cas par exemple lorsque le lecteur est du type A de la norme 14443 qui utilise un indice de modulation de cent pourcents. Ainsi, la communication du dispositif selon l'invention n'est pas perturbée pas des absences momentanées de signal aux bornes de l'antenne.

De manière avantageuse, le circuit de pilotage comprend un redresseur connecté à l'antenne, un détecteur d'enveloppe connecté à la sortie du redresseur, un moyenneur connecté à la sortie du redresseur et un soustracteur dont la borne non-inverseuse est connectée à la sortie du détecteur, dont la borne inverseuse est connectée à la sortie du moyenneur et dont la sortie est connectée au multiplicateur pour commander le gain de celui-ci.

De cette manière, une détection automatique des trous dans le signal aux bornes de l'antenne est réalisée.

Avantageusement, les moyens de modulation sont aptes à moduler le signal de comblement de trou, et les moyens d'application sont aptes à appliquer aux bornes de l'antenne la somme du signal prélevé aux bornes de celle-ci et du signal de comblement modulé.

De cette manière, il est obtenu de façon simple un signal modulé pour la communication avec une carte de type A alors même que le lecteur est de type A.

L'invention a également pour objet un système de communication radiofréquence comportant une source d'émission radiofréquence selon une porteuse, un transpondeur et un dispositif du type précité.

L'invention a également pour objet un procédé d'émission de commande d'un dispositif de communication radiofréquence destiné à communiquer avec un transpondeur, ledit dispositif étant du type précité, le procédé comportant :
■ le placement du transpondeur et du dispositif dans un champ magnétique radiofréquence sensiblement homogène à l'échelle de l'antenne du dispositif ;
■ le placement du dispositif à proximité du transpondeur de manière à établir un couplage inductif fort entre le dispositif et le transpondeur ; et
■ l'activation des moyens de prélèvement et de traitement, des moyens de modulation et des moyens d'application du dispositif lors d'une émission de commande par celui-ci à destination du transpondeur.

### BREVE DESCRIPTION DES FIGURES

L'invention sera mieux comprise à la lecture de la description qui va suivre, donnée uniquement à titre d'exemple, et faite en relation avec les dessins annexés dans lesquels :
- la figure 1 est une vue schématique partielle d'un lecteur sans contact de l'état de la technique ;
- la figure 2 est une vue schématique partielle d'un transpondeur de l'état de la technique ;
- la figure 3 est une vue schématique de dessus d'une carte sans contact de l'état de la technique ;
- la figure 4 est une vue schématique de dessus d'un dispositif selon l'invention ;
- la figure 5 est une vue schématique d'un premier mode de réalisation du circuit de communication entrant dans la constitution du dispositif de la figure 4 ;
- la figure 6 est une vue schématique d'un deuxième mode de réalisation du circuit de communication entrant dans la constitution du dispositif de la figure 4 ; et
- la figure 7 est une vue schématique d'un troisième mode de réalisation du circuit de communication entrant dans la constitution du dispositif de la figure 4.

### DESCRIPTION DETAILLEE DE L'INVENTION

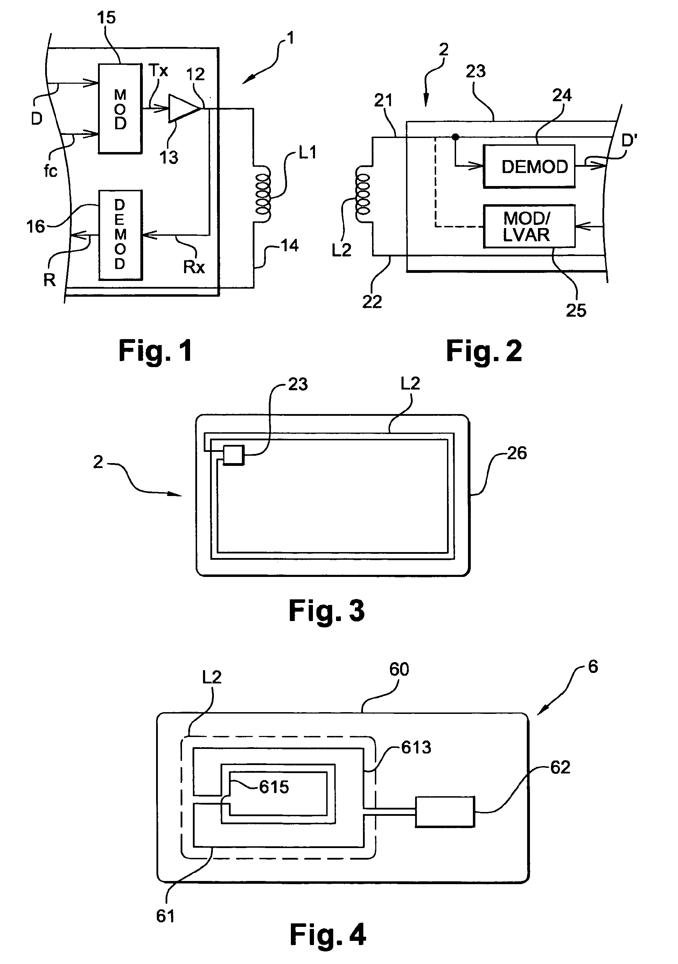

Les figures 1 et 2 représentent, de façon schématique et partielle, des exemples de lecteur sans contact **1** et de transpondeur **2** de l'état de la technique, comme une carte sans contact par exemple.

Sur la figure 1, le lecteur **1** est pourvu d'un circuit oscillant basé sur une antenne L1 connectée à une borne **12** de sortie d'un amplificateur ou coupleur d'antenne **13** et à une borne **14** à un potentiel de référence tel que la masse.

L'amplificateur **13** reçoit un signal Tx à transmettre qui est fourni par un modulateur **15.** Le modulateur **15** reçoit principalement un signal de données D à transmettre et une fréquence fc de porteuse. Le signal Tx est transmis qu'il y ait des données D ou non à transmettre dans la mesure où le champ généré sur la base du signal Tx sert de source d'énergie au transpondeur **2** (figure 2). Les données D à transmettre proviennent usuellement d'un module numérique, comme par exemple un microprocesseur (non représenté).

Le lecteur **1** comporte également un démodulateur **16** pour détecter d'éventuelles données reçues du transpondeur 2. Par exemple, le démodulateur **16** reçoit la tension prélevée aux bornes de l'antenne L1 (signal Rx) et le démodulateur fournit un signal de données reçues R.

Sur la figure 2, le transpondeur **2** comporte un circuit oscillant, ayant une antenne L2, destinée à capter le champ engendré par le circuit oscillant du lecteur **1.** Dans cet exemple, des bornes **21, 22** de l'antenne L2 sont connectées à un circuit intégré **23** d'exploitation des signaux. Le circuit **23** comporte notamment un démodulateur **24** pour démoduler les signaux émis par le terminal. Les signaux issus du démodulateur **24** constituent les signaux de données D' reçus du lecteur 1 et sont envoyés à un module de traitement (non représentés) du circuit **23,** incluant par exemple un microcontrôleur ou un circuit en logique câblée, dont une horloge de fonctionnement est extraite du signal aux bornes du circuit oscillant.

Pour émettre des données vers le lecteur **1,** le transpondeur **2** comporte un élément **25** d'impédance variable capable de modifier la charge constituée par ses propres circuits électroniques sur son circuit oscillant.

Quand le transpondeur **2** se trouve dans le champ du lecteur **1,** une tension haute fréquence est engendrée aux bornes de son circuit oscillant. Cette tension, une fois redressée et filtrée par le circuit **23,** fournit une tension d'alimentation aux différents circuits électroniques du transpondeur **2.**

Dans le sens de communication transpondeur **2** vers lecteur **1,** la modulation des données à transmettre est généralement appelée « rétromodulation » et est effectuée à une fréquence inférieure à la fréquence fc d'excitation du circuit oscillant du lecteur **1.** Par exemple, une carte sans contact reçoit des commandes par modulation d'une porteuse de fréquence 13,56 MHz pour les normes ISO 1443 et ISO 15693, et répond par rétromodulation d'une sous-porteuse de fréquence 847,5 KHz pour les normes ISO 1443 et ISO 15693.

Lorsque le circuit **25,** également appelé circuit de rétromodulation, accroît la charge du transpondeur **2** sur le circuit oscillant du lecteur **1,** le circuit oscillant du transpondeur **2** est soumis à un amortissement supplémentaire par rapport à la charge constituée par les autre circuits, ce qui engendre que le transpondeur **2** prélève une quantité d'énergie plus important du champ haute fréquence. Côté lecteur **1,** cette variation d'énergie se traduit par une variation du courant dans l'antenne L1 dans la mesure où l'amplificateur **13** maintient l'amplitude du signal d'excitation haute fréquence constante ou entre deux états fixés par une modulation d'amplitude.

Dans un système de communication carte-lecteur, dans lequel le transpondeur est une carte sans contact, le champ peut être décomposé en deux composantes dues respectivement au lecteur **1** et au transpondeur **2.** On peut distinguer un champ désigné arbitrairement champ « primaire » produit par l'enroulement de l'antenne L1 du lecteur **1** d'un champ nommé arbitrairement « secondaire » produit par l'enroulement de l'antenne L2 de la carte. Le champ primaire est modulé lors d'une communication lecteur vers carte. Le champ secondaire est modulé lors d'une rétromodulation (transmission carte vers lecteur).

Le champ primaire produit par le lecteur et appliqué à la carte peut dans des systèmes à faible distance être considéré comme sensiblement homogène sur l'ensemble de l'enroulement de la carte. Par contre, le champ secondaire ne peut pas être considéré comme homogène à proximité de la carte.

La figure 3 représente, vue de dessus et de façon très schématique, la carte sans contact. La carte sans contact, usuellement au format carte à puce, comprend un support **26,** par exemple en matière plastique, sur ou dans lequel est encarté le circuit intégré **23.** L'antenne L2, formée d'un enroulement conducteur plan d'une ou plusieurs boucles, par exemple rectangulaires, a ses extrémités connectées au circuit intégré **23.**

La figure 4 illustre, vue de dessus et de façon très schématique, un dispositif **60** selon un premier mode de réalisation l'invention, par exemple un lecteur sans contact embarqué dans un téléphone mobile ou un assistant numérique personnel.

Le dispositif **60,** par exemple formé sur une plaquette de circuit imprimé, comporte une antenne **61** constitué d'un conducteur unique conformé selon une première boucle **613** et une deuxième boucle **615** imbriquée à l'intérieur de la première boucle **613,** les boucles **613** et **615** présentant ainsi des sens de parcours inversés.

Le dispositif **60** comporte également un circuit intégré **62** connecté aux bornes de l'antenne **61** et en charge de l'émission et de la réception de données par l'antenne **61,** comme cela sera expliqué plus en détail par la suite.

De préférence, la surface des boucles **613** et **615** sont sensiblement égales de manière à ce que lorsque l'antenne **61** est exposée à un champ magnétique homogène, les forces électromotrices induites dans les boucles **613** et **615** se compensent. La sensibilité de l'antenne **61** à un champ magnétique homogène est ainsi minimisée.

De préférence également, les dimensions de l'antenne **61** sont telles que ladite antenne est apte à s'inscrire à l'intérieur de la boucle moyenne de l'antenne L2 de la carte sans contact **2** destinée à communiquer avec le dispositif **60.** Ainsi, en plaçant l'antenne **61** parallèlement au plan de l'antenne L2 de la carte **2,** comme illustré à la figure 4, la boucle périphérique **613** est plus proche de l'antenne L2 que la boucle centrale **615.** La force électromotrice induite dans la boucle périphérique **615** par la carte **2** est donc plus importante que la force électromotrice induite dans la boucle centrale **615,** évitant ainsi que ces deux forces électromotrices ne se compensent. Par ailleurs, les forces électromotrices induites dans les boucles **613** et 615 par un champ magnétique homogène continuent de se compenser du fait de leur surface sensiblement égale.

En variante, plusieurs sous-boucles composent l'une et/ou l'autre des boucles, en respectant que leurs sens de parcours soient opposés.

En particulier, l'antenne du dispositif selon l'invention comporte de préférence une grande boucle périphérique dans laquelle sont imbriquées plusieurs sous-boucles centrales tournant en sens inverse, les surfaces des sous-boucles étant sensiblement égales et la somme de ces surfaces étant sensiblement égale à la surface de la grande boucle périphérique. Utiliser plusieurs sous-boucles permet en effet d'améliorer le couplage avec la carte sans contact dans la mesure où l'utilisation de plusieurs sous-boucles de faible surface centrées dans la grande boucle induit une soustraction moindre de la composante du signal relatif à la carte.

On sait qu'il existe plusieurs types de modulation dans les normes ISO 14443, la norme ISO 15693 ou la norme ISO 18000-X. Plus particulièrement, on distingue les modulations dites de type B lorsque l'indice de modulation est faible, en général de l'ordre de 10% et de type A lorsque l'indice de modulation est égal à 100%. Lorsqu'un appareil, lecteur ou carte sans contact, utilise une modulation de type A, il sera désigné par l'expression lecteur ou carte « de type A » et « de type B» lorsqu'il utilise une modulation de type B.

Il va maintenant être décrit des modes de réalisation du circuit intégré **62** en fonction des types de lecteur et de carte sans contact avec lesquels le dispositif selon l'invention fonctionne.

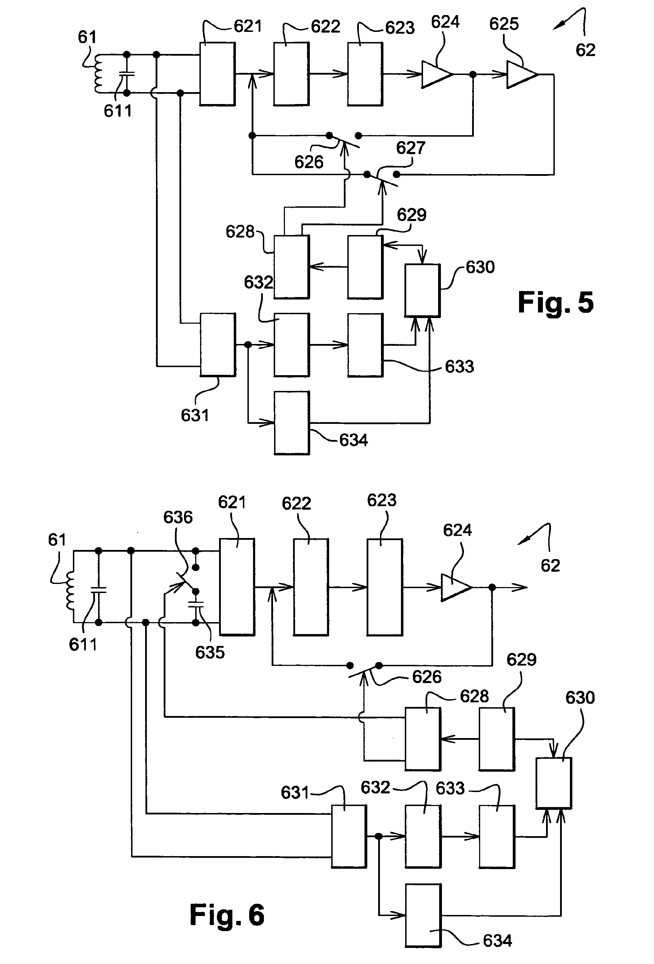

La figure 5 est une vue schématique d'un premier mode de réalisation du circuit intégré **62** particulièrement adapté lorsque le lecteur et la carte sans contact sont tous deux du type B.

Pour l'interrogation de la carte sans contact, le circuit **62** comprend un redresseur **621** connecté aux bornes de l'antenne **61,** qui forme avec un condensateur **611** branché entre ses bornes un circuit oscillant comme cela est connu en soi.

Un détecteur d'enveloppe **622,** comme par exemple un filtre passe-bas du type RC, est par ailleurs connecté en sortie du redresseur **621** et fournit ainsi l'enveloppe du signal aux bornes de l'antenne ce qui permet la détection de la modulation de la porteuse de celui-ci.

Le circuit **62** comprend également un moyenneur **623,** par exemple sous la forme d'un filtre RC de fréquence de coupure inférieure à celle du détecteur **622,** ainsi que deux multiplicateurs **624, 625** par un gain G prédéterminé, par exemple égal à 0,92. Les multiplicateurs **624, 625** sont connectés en série à la sortie du moyenneur **623** et définissent respectivement un niveau haut et un niveau bas de tension, ces niveaux étant utilisés lors de la modulation quand le dispositif commande une carte sans contact.

A cet effet, les sorties des multiplicateurs **624** et **625** sont connectés à la sortie du redresseur **621,** par exemple un pont de Graetz (pont de diodes), au travers d'interrupteurs pilotables **626, 627** respectifs. Ainsi, en fermant l'interrupteur **626** et en laissant l'interrupteur **627** ouvert, on impose le niveau haut de tension aux bornes de l'antenne **61.** De même, en fermant l'interrupteur **627** et en laissant l'interrupteur **626** ouvert, on impose le niveau bas de tension aux bornes de l'antenne **61.**

Le signal en sortie du premier multiplicateur **624** forme donc un signal de référence de niveau haut qui est modulé au moyen du second multiplicateur et des interrupteurs pilotables **626, 627.**

Le circuit **62** comprend également, pour l'émission de commandes à destination de la carte, un modulateur de porteuse **628** pilotant les interrupteurs **626, 627.** Le modulateur **628** reçoit des ordres de modulations d'un premier module de traitement de données **629,** ce dernier étant piloté par un séquenceur **630,** comme cela est connu en soi.

Pour la réception de données en provenance de la carte sans contact, le circuit **62** comprend un amplificateur différentiel **631** connecté aux bornes de l'antenne **61** et prélevant ainsi le signal modulé aux bornes de celle-ci. Un démodulateur par corrélation **632,** connecté à l'amplificateur **631,** détermine quant à lui les données contenues dans la modulation de la sous-porteuse produite par rétromodulation par la carte sans contact. Pour ce faire, les interrupteurs **626** et **627** sont ouverts lorsque le dispositif selon l'invention écoute la carte.

Le circuit **62** comprend également d'un second module **633** effectuant un traitement approprié des données reçues de la carte dans contact, le second module de traitement **633** étant sous les ordres du séquenceur **630,** comme cela est connu en soi.

Enfin, le circuit **62** comprend, connecté en sortie de l'amplificateur différentiel **631,** un module de récupération de l'horloge **634** issue de la porteuse du lecteur fixe, l'horloge récupérée séquencant les parties numériques du circuit **62,** comme cela est connu en soi. On notera que l'antenne du dispositif selon l'invention voit sensiblement uniquement le champ de la carte. Comme cette dernière voit le champ du lecteur, le dispositif selon l'invention également, ce qui permet donc de récupérer l'horloge de la porteuse émise par le lecteur.

La figure 6 illustre de manière schématique un second mode de réalisation du circuit **62** particulièrement adapté lorsque le lecteur sans contact est du type B et la carte sans contact est du type A

Pour l'interrogation de la carte sans contact, ce second mode de réalisation diffère de celui décrit en relation avec la figure 5 en ce qu'en lieu et place du second multiplicateur **625** et du second interrupteur **627** associé, un second condensateur **635** est apte à être connecté aux bornes de l'antenne **61** au moyen d'un interrupteur **636** afin de faire varier l'accord de celle-ci et ainsi créer une modulation d'amplitudes de la porteuse du type A.

Le signal en sortie du multiplicateur **624** forme donc un signal de référence de niveau haut qui est modulé au moyen du second condensateur **635** et des interrupteurs pilotables **626, 636.**

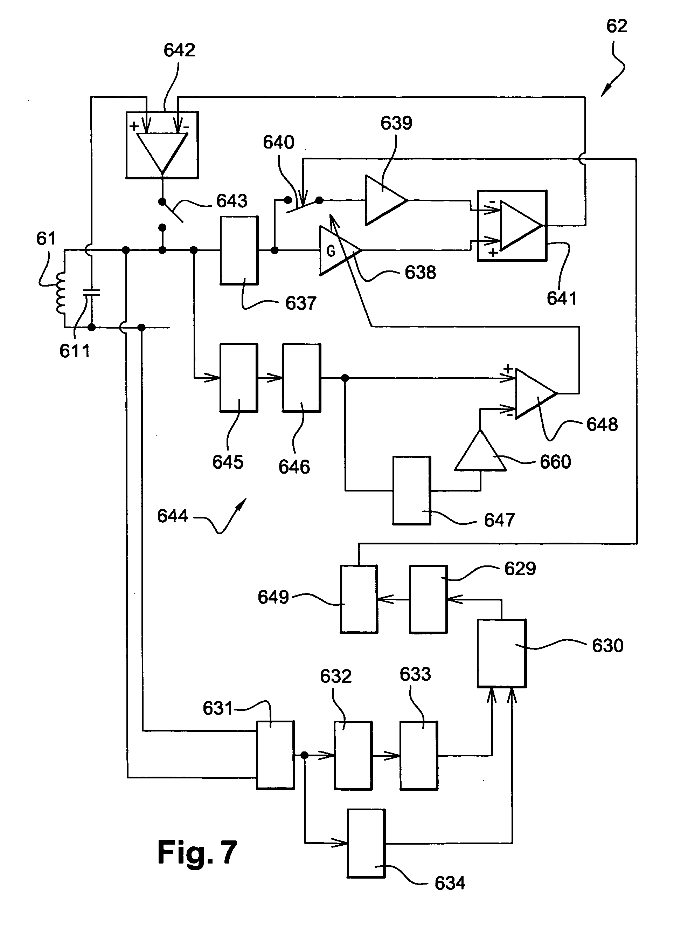

La figure 7 illustre de manière schématique un troisième mode de réalisation du circuit **62** particulièrement adapté lorsque le lecteur sans contact est du type A, quel que soit le type de la carte sans contact.

Dans ce troisième mode de réalisation, pour l'interrogation de la carte sans contact, le circuit **62** comporte un oscillateur **637** générant un signal sinusoïdal de fréquence sensiblement égale à celle de la porteuse du lecteur fixe et synchronisé sur celle-ci, par exemple au moyen d'une boucle à verrouillage de phase (non représentée).

Un premier multiplicateur **638** à gain variable et un second multiplicateur **639** sont connectés en sortie de l'oscillateur **637,** le second multiplicateur **639** l'étant au travers d'un premier interrupteur **640.** Les sorties des premier et second multiplicateurs **638, 639** sont par ailleurs connectées respectivement aux bornes non inverseuse et inverseuse d'un premier soustracteur **641.**

Un additionneur **642** est connecté, par sa borne inverseuse, à la sortie du premier soustracteur **641.** La sortie du deuxième soustracteur **642** est quant à elle connectée, au travers d'un second interrupteur **643,** à sa borne non inverseuse et à la borne de l'antenne **61** à laquelle est connecté l'oscillateur **637** afin de commander la force électromotrice de l'antenne **61** en appliquant la somme du signal de l'antenne dont les trous de modulation sont comblés par le signal produit en sortie du soustracteur **641.**

Un module **644** de réglage du gain du premier multiplicateur **638** comporte un redresseur **645** connecté à l'antenne **61,** un détecteur d'enveloppe **646** connecté en sortie du redresseur **645,** un moyenneur **647** connecté en sortie du détecteur **646,** un deuxième multiplicateur **660** par un gain inférieur à 1, par exemple un gain de 0,5, et un troisième soustracteur **648** dont les bornes non inverseuse et inverseuse sont respectivement connectées aux sorties du détecteur **646** et du moyenneur **647.** La sortie du troisième soustracteur **648** est connectée au premier multiplicateur **638** et en règle le gain.

Comme on peut le constater, le module **644** détecte automatiquement les trous du signal aux bornes de l'antenne et applique un gain non nul lors des intervalles de temps correspondant et un gain nul sinon. L'addition du signal en sortie du soustracteur **641** et du signal aux bornes de l'antenne produit ainsi une modulation de porteuse.

Le circuit **62** comporte également un modulateur de porteuse **649** commandant le premier interrupteur **640** et recevant des ordres de modulations d'un premier module de traitement de données **629,** ce dernier étant piloté par un séquenceur **630,** comme cela est connu en soi.

Le signal en sortie du premier multiplicateur à gain variable **638** forme ainsi un signal de référence de niveau haut qui est modulé au moyen de l'interrupteur **640,** du multiplicateur **639** et du soustracteur **641.**

Pour la réception de données en provenance de la carte sans contact, le circuit **62** comprend un amplificateur différentiel **631,** un démodulateur par corrélation **632,** un second module de traitement de données **633** et un module de récupération de l'horloge **634** issue de la porteuse du lecteur fixe, analogues à ceux des modes de réalisation illustrés en relation avec les figures 5 et 6.

Un dispositif selon l'invention équipé d'un tel circuit **62** peut ainsi fonctionner quand le lecteur sans contact est de type A de la norme ISO 14443 et utilise une modulation d'indice très élevé comme 100% par exemple pour envoyer des commandes. Avec ce type de modulation d'indice de 100%, il existe des périodes pendant lesquelles le lecteur n'envoie aucun signal. De fait, pendant de telles périodes, ni la carte sans contact, ni le dispositif selon l'invention ne sont téléalimentés. En outre, comme le lecteur n'envoie aucun signal, il n'existe donc pas de base sur laquelle se fonder pour établir une communication entre le dispositif selon l'invention et la carte sans contact.

Pour pallier ceci, le circuit **62** décrit en relation avec la figure 7 recrée le signal pendant les périodes de temps où le lecteur est silencieux. Ainsi, pendant les phases de commande de la carte, le second interrupteur **643** est fermé. Un gain adaptable est alors appliqué au signal produit par l'oscillateur **637** et le signal ainsi amplifié est soustrait au signal de l'antenne prélevé par le soustracteur **642.** Lorsque le premier interrupteur **640** est ouvert, le signal résultant présente ainsi une amplitude constante, les absences de signal du lecteur étant comblée quelles que soient leur durée et amplitude.

L'adaptation du gain du premier multiplicateur **638** est obtenue en surveillant les variations de l'enveloppe du signal aux bornes de l'antenne grâce au module **644** de réglage du gain. Ce module **644** détermine en effet les variations de cette enveloppe par rapport à sa moyenne, moyenne vers laquelle tend le signal créé en sortie du deuxième soustracteur **642.**

La modulation du signal de commande de la carte sans contact est par ailleurs réalisée par l'ouverture et la fermeture du premier interrupteur **640.** La fermeture de ce dernier provoque en effet une baisse de l'amplitude du signal aux bornes de l'antenne 71, ce qui correspond au niveau bas de la modulation.

Enfin, pendant les phases d'écoute de la carte sans contact, le second interrupteur 643 est ouvert afin de ne pas perturber le signal aux bornes de l'antenne **71.**

Bien entendu, d'autres modes de réalisation sont possibles. Plus particulièrement, le signal de référence obtenu à la suite du prélèvement et du traitement du signal aux bornes de l'antenne peut être un courant par exemple.

## Revendications

1. Dispositif de communication radiofréquence comportant une antenne inductive *(61),* ***caractérisé* en ce que** "antenne (61) est apte à établir un couplage sensiblement nul avec un émetteur d'un champ magnétique sensiblement homogène à l'échelle de cehe-ci et apte à établir un couplage inductif avec un transpondeur placé à proximité du dispositif pour communiquer avec celui-ci, et **en ce qu'**il comporte un circuit d'interrogation du transpondeur comprenant:
■ des moyens (621, 622, 623, 624; 637, 638) de prélèvement et de traitement du signal aux bornes de l'antenne aptes à produire en fonction de celui-ci un signal de référence;
■ des moyens (625, 626, 627 ; 626, 635, 636 ; 640,639, 641) de modulation aptes à moduler le signal de référence; et
■ des moyens (621 ; 642) d'application aptes à appliquer le signal modulé aux bornes de l'antenne.

2. Dispositif de communication radiofréquence selon la revendication 1, ***caractérisé* en ce que** l'antenne comporte un premier et un second enroulement (613, 615;713;715) connectés en série et tournant en sens inverse.

3. Dispositif de communication radiofréquence selon la revendication 2, ***caractérisé* en ce que** la surface du second enroulement (615 ; 715) est sensiblement égale à la surface du premier enroulement (613 ; 713).

4. Dispositif de communication radiofréquence selon la revendication 3, ***caractérisé* en** cc que le second enroulement comprend une pluralité de boucles dont la surface de chacune est un sous-multiple de la surface du premier enroulement.

5. Dispositif de communication radiofréquence selon l'une quelconque des revendications précédentes, ***caractérisé* en ce que** le premier enroulement (613) définit une surface à l'intérieur de laquelle s'inscrit le second enroulement (615).

6. Dispositif de communication radiofréquence selon l'une quelconque des revendications précédentes, ***caractérisé* en ce que** les moyens (621, 622, 623, 624) de prélèvement et de traitement comprennent des moyens (621, 622, 623) de redressement et de moyennage du signal aux bornes de l'antenne.

7. Dispositif de communication radiofréquence selon la revendication 6. ***caractérisé* en ce que** les moyens (621, 622, 623) de redressement et de moyennage comprennent un redresseur (621) connecté aux bornes de l'antenne (61 ; 71), un détecteur d'enveloppe (622) connecté en sortie du redresseur (621), et un moyenneur (623) connecté en sorte du détecteur d'enveloppe (622)

8. Dispositif de communication radiofréquence selon la revendication 6 ou 7, ***caractérisé* en ce que** les moyens (621, 622, 623, 624) de prélèvement et de traitement comprennent un premier multiplicateur (624) par un premier gain prédéterminé inférieur à 1, connecté en sortie des moyens de redressement et de moyennage.

9. Dispositif de communication radiofréquence selon l'une des revendications 6, 7 ou 8, ***caractérisé* en ce que** les moyens (625, 626, 627) de modulation comprennent un second multiplicateur (625) par un second gain prédéterminé, connecté en sortie des moyens (621, 622, 623, 624) de prélèvement et de traitement, un premier interrupteur pilotable (626) agencé entre les moyens (621, 622, 623, 624) de prélèvement et de traitement et l'antenne (61), et un second interrupteur pilotable (627) agencé entre le second multiplicateur (625) et l'antenne (61).

10. Dispositif de communication radiofréquence selon l'une des revendications 6, 7 ou 8, ***caractérisé* en ce que** les moyens (626, 635, 636) de modulation comprennent un premier interrupteur pilotable (626) agencé entre les moyens (621, 622, 623, 624) de prélèvement et de traitement et l'antenne (61), et un condensateur (635) apte à être connecté en parallèle de l'antenne (61) au moyen d'un second interrupteur pilotable (636).

11. Dispositif de communication radiofréquence selon l'une quelconque des revendications 1 à 5, ***caractérisé* en ce que** les moyens (637, 638) de prélèvement et de traitement comprennent des moyens (637, 638) de comblement aptes à produire un signal de comblement des trous du signal prélevé aux bornes de l'antenne.

12. Dispositif de communication radiofréquence selon la revendication 11, ***caractérisé* en ce que** les moyens de comblement comprennent un oscillateur (637) connecté à l'antenne (61 ; 71) et apte à générer un signal sinusoïdal de fréquence sensiblement égale à celle d'une porteuse reçue sur l'antenne et synchronisé sur celle-ci, un premier multiplicateur (638) par un gain variable connecté en sortie de l'oscillateur (637) et un circuit de pilotage du gain du multiplicateur apte à régler celui-ci sur une valeur non nulle lorsque le signal prélevé aux bornes de l'antenne présente un trou.

13. Dispositif de communication radiofréquence selon la revendication 12, ***caractérisé* en ce que** le circuit de pilotage comprend un redresseur (645) connecté à l'antenne (61 ; 71), un détecteur d'enveloppe (646) connecté à la sortie du redresseur (645), un moyenneur (646) connecté à la sortie du redresseur (645) et un soustracteur (648) dont la borne non-inverseuse est connectée à la sortie du détecteur (646), dont la borne inverseuse est connectée à la sortie du moyenneur (647) et dont la sortie est connectée au multiplicateur (638) pour commander le gain de celui-ci.

14. Dispositif de communication radiofréquence selon l'une des revendications 11. 12 ou 13, ***caractérisé* en ce que** les moyens de modulation sont aptes à moduler le signal de comblement de trou, et **en ce que** les moyens d'application sont aptes à appliquer aux bornes de l'antenne la somme du signal prélevé aux bornes de celle-ci et du signal de comblement modulé.

15. Système de communication radiofréquence comportant une source d'émission radiofréquence selon une porteuse, un transpondeur et un dispositif selon l'une quelconque des revendications précédentes.

16. Procédé d'émission de commande d'un dispositif de communication radiofréquence destiné à communiquer avec un transpondeur, ledit dispositif étant conforme à l'une quelconque des revendications 1 à 14, le procédé comportant :
■ le placement du transpondeur et du dispositif dans un champ magnétique radiofréquence sensiblement homogène à l'échelle de l'antenne du Dispositif;
■ le placement du dispositif à proximité du transpondeur de manière à établir un couplage inductif entre le dispositif et le transpondeur leur permettant ainsi de communiquer ;
■le prélèvement et le traitement du signal aux bornes de l'antenne du dispositif de manière à produire en fonction de celui-ci un signal de référence;
■ la modulation du signal de référence ; et
m l'application du signal modulé aux bornes de l'antenne du dispositif.

## Claims

1. Radio-frequency communication device comprising an inductive antenna (61), ***characterized* in that** the antenna (61) is capable of establishing a substantially null coupling with a transmitter which produces a magnetic field which is substantially homogeneous on the scale of the antenna and is capable of establishing inductive coupling with a transponder located in the vicinity of the device, and **in that** it comprises a transponder interrogation circuit comprising:
■means of sampling and processing (621, 622, 623, 624; 637, 638) the signal on the antenna terminals which are capable of producing a reference signal as a function of said signal;
■ modulation means (625, 626, 627; 626, 635, 636; 640, 639, 641) capable of modulating the reference signal; and
■ application means (621; 642) capable of applying the modulated signal to the antenna terminals.

2. Radio-frequency communication device as claimed in claim 1, ***characterized* in that** the antenna comprises a first winding and a second winding (613, 615; 713; 715) which are connected in series and wound in opposite directions.

3. Radio-frequency communication device as claimed in claim 2, ***characterized* in that** the surface area of second winding (615; 715) is substantially equal to the surface area of first winding (613; 713).

4. Radio-frequency communication device as claimed in claim 3, ***characterized* in that** the second winding comprises a plurality of loops, the surface area of each of which is a submultiple of the surface area of the first winding.

5. Radio-frequency communication device as claimed in any of the above claims, ***characterized* in that** first winding (613) defines a surface area inside which second winding (615) is nested.

6. Radio-frequency communication device as claimed in any of the above claims, ***characterized* in that** sampling and processing means (621, 622, 623, 624) comprise means of rectifying and averaging (621, 622, 623) the signal on the antenna terminals.

7. Radio-frequency communication device as claimed in claim 6, ***characterized* in that** rectifying and averaging means (621, 622, 623) comprise a rectifier (621) connected to the terminals of antenna (61; 71), an envelope detector (622) connected to the output of rectifier (621) and an averager circuit (623) connected to the output of envelope detector (622).

8. Radio-frequency communication device as claimed in claim 6 or 7, ***characterized* in that** sampling and processing means (621, 622, 623, 624) comprise a first multiplier (624), which multiplies by a first predetermined gain which is less than 1, connected to the output of the rectifying and averaging means.

9. Radio-frequency communication device as claimed in any of claims 6, 7 or 8, ***characterized* in that** modulation means (625, 626, 627) comprise a second multiplier (625), which multiplies by a second predetermined gain, connected to the output of sampling and processing means (621, 622, 623, 624), a first control switch (626) located between sampling and processing means (621, 622, 623, 624) and antenna (61) and a second controllable switch (627) located between second multiplier (625) and antenna (61).

10. Radio-frequency communication device as claimed in any of claims 6, 7 or 8, ***characterized* in that** modulation means (626, 635, 636) comprise a first controllable switch (626) located between sampling and processing means (621, 622, 623, 624) and antenna (61) and a capacitor (635) capable of being connected in parallel with antenna (61) by means of a second controllable switch (636).

11. Radio-frequency communication device as claimed in any of claims 1 to 5, ***characterized* in that** sampling and processing means (637, 638) comprise filling means (637, 638) capable of producing a signal to fill gaps in the signal sampled on the antenna terminals.

12. Radio-frequency communication device as claimed in claim 11, ***characterized* in that** the filling means comprise an oscillator (637) which is connected to antenna (61; 71) and capable of generating a sine-wave signal having a frequency substantially equal to that of a carrier received on the antenna and synchronized with the latter, a first multiplier (638), which multiplies by a variable gain, being connected to the output of the oscillator (637) and a circuit for controlling the gain of the multiplier capable of adjusting this gain to a value which is not zero when there is a gap in the signal sampled on the antenna terminals.

13. Radio-frequency communication device as claimed in claim 12, ***characterized* in that** the control circuit comprises a rectifier (645) connected to antenna (61; 71), an envelope detector (646) connected to the output of rectifier (645), and averager circuit (646) connected to the output of rectifier (645) and a subtracter (648), the non-inverting terminal of which is connected to the output of detector (646), the inverting terminal of which is connected to the output of averager circuit (647) and the output of which is connected to multiplier (638) in order to control the latter's gain.

14. Radio-frequency communication device as claimed in any of claims 11, 12 or *13,* ***characterized* in that** the modulation means are capable of modulating the gap filling signal and **in that** the application means are capable of applying the sum of the signal sampled on the antenna terminals and the modulated gap filling signal to the antenna terminals.

15. Radio-frequency communication system comprising a radio-frequency emission source using a carrier, a transponder and a device according to any of the above claims.

16. Method for transmitting a command from a radio-frequency communication device designed to communicate with a transponder, said device being in conformity with any of claims 1 to 14 and the method consisting of:
■ placing the transponder and the device in a radio-frequency magnetic field which is substantially homogeneous on the scale of the device's antenna;
■ placing the device close to the transponder so as to establish inductive coupling between the device and the transponder, thus allowing them to communicate;
■ sampling and processing the signal on the antenna terminals in order to produce a reference signal ;
■ modulating the reference signal ; and
■ applying the modulated signal at the antenna terminals.

## Patentansprüche

1. Funkfrequenzkommunikationsvorrichtung mit einer induktiven Antenne (61), **dadurch gekennzeichnet, dass** die Antenne (61) geeignet ist, eine im Wesentlichen Null betragende Kopplung mit einem Sender eines im Wesentlichen zum Empfangsbereich dieser Antenne homogenen Magnetfelds herzustellen und geeignet ist, eine induktive Kopplung mit einem Transponder herzustellen, der in der Nähe der Vorrichtung angeordnet ist, um mit dieser zu kommunizieren, und dass die Vorrichtung eine Abfrageschaltung für den Transponder umfasst, die umfasst:
• Einrichtungen (621, 622, 623, 624; 637, 638) zum Abgreifen und Verarbeiten des Signals an den Anschlüssen der Antenne, die geeignet sind, in Abhängigkeit von diesem ein Referenzsignal zu erzeugen;
• Modulationseinrichtungen (625, 626, 627; 626, 635, 636; 640, 639, 641), die geeignet sind, das Referenzsignal zu modulieren; und
• Anlegeeinrichtungen (621; 642), die geeignet sind, das modulierte Signal an die Anschlüsse der Antenne anzulegen.

2. Funkfrequenzkommunikationsvorrichtung nach Anspruch 1, **dadurch gekennzeichnet, dass** die Antenne eine erste und eine zweite Wicklung (613, 615; 713, 715) umfasst, die in Reihe geschaltet sind und in entgegengesetzten Richtungen verlaufen.

3. Funkfrequenzkommunikationsvorrichtung nach Anspruch 2, **dadurch gekennzeichnet, dass** die Fläche der zweiten Wicklung (615; 715) im Wesentlichen gleich der Fläche der ersten Wicklung (613; 713) ist.

4. Funkfrequenzkommunikationsvorrichtung nach Anspruch 3, **dadurch gekennzeichnet, dass** die zweite Wicklung mehrere Windungen umfasst, wovon die Fläche von jeder ein Teilvielfaches der Fläche der ersten Wicklung ist.

5. Funkfrequenzkommunikationsvorrichtung nach einem der vorhergehenden Ansprüche, **dadurch gekennzeichnet, dass** die erste Wicklung (613) eine Fläche bildet, in die sich die zweite Wicklung (615) einfügt.

6. Funkfrequenzkommunikationsvorrichtung nach einem der vorhergehenden Ansprüche, **dadurch gekennzeichnet, dass** die Einrichtungen (621, 622, 623, 624) zum Abgreifen und Verarbeiten Einrichtungen (621, 622, 623) zum Gleichrichten und zur Mittelwertbildung des Signals an den Anschlüssen der Antenne umfassen.

7. Funkfrequenzkommunikationsvorrichtung nach Anspruch 6, **dadurch gekennzeichnet, dass** die Einrichtungen (621, 622, 623) zum Gleichrichten und zur Mittelwertbildung einen Gleichrichter (621), der an die Anschlüsse der Antenne (61; 71) angeschlossen ist, einen Hüllkurvendetektor (622), der an den Ausgang des Gleichrichters (621) angeschlossen ist, und eine Mittelwertschaltung (623) umfassen, die am Ausgang des Hüllkurvendetektors (622) angeschlossen ist.

8. Funkfrequenzkommunikationsvorrichtung nach Anspruch 6 oder 7, **dadurch gekennzeichnet, dass** die Einrichtungen (621, 622, 623, 624) zum Abgreifen und Verarbeiten eine erste Vervielfacherschaltung (624) mit einer ersten vorbestimmten, unter 1 betragenden Verstärkung umfassen, die am Ausgang der Einrichtungen zum Gleichrichten und zur Mittelwertbildung angeschlossen ist.

9. Funkfrequenzkommunikationsvorrichtung nach einem der Ansprüche 6, 7 oder 8, **dadurch gekennzeichnet, dass** die Modulationseinrichtungen (625, 626, 627) eine zweite Vervielfacherschaltung (625) mit einer zweiten vorbestimmten Verstärkung, die am Ausgang der Einrichtungen (621, 622, 623, 624) zum Abgreifen und Verarbeiten angeschlossen ist, einen ersten steuerbaren Schalter (626), der zwischen den Einrichtungen (621, 622, 623, 624) zum Abgreifen und Verarbeiten und der Antenne (61) angeordnet ist, und einen zweiten steuerbaren Schalter (627) umfassen, der zwischen der zweiten Vervielfacherschaltung (625) und der Antenne (61) angeordnet ist.

10. Funkfrequenzkommunikationsvorrichtung nach einem der Ansprüche 6, 7 oder 8, **dadurch gekennzeichnet, dass** die Modulationseinrichtungen (626, 635, 636) einen ersten steuerbaren Schalter (626), der zwischen den Einrichtungen (621, 622, 623, 624) zum Abgreifen und Verarbeiten und der Antenne (61) angeordnet ist, und einen Kondensator (635) umfassen, der geeignet ist, mittels eines zweiten steuerbaren Schalters (636) mit der Antenne (61) parallelgeschaltet zu werden.

11. Funkfrequenzkommunikationsvorrichtung nach einem der Ansprüche 1 bis 5, **dadurch gekennzeichnet, dass** die Einrichtungen (621, 622, 623, 624) zum Abgreifen und Verarbeiten Auffülleinrichtungen (637, 638) umfassen, die geeignet sind, ein Füllsignal für die Leerstellen des an den Anschlüssen der Antenne abgegriffenen Signals zu erzeugen.

12. Funkfrequenzkommunikationsvorrichtung nach Anspruch 11, **dadurch gekennzeichnet, dass** die Auffülleinrichtungen einen Oszillator (637), der an die Antenne (61; 71) angeschlossen ist und ein sinusförmiges Signal mit einer Frequenz erzeugen kann, die im Wesentlichen gleich derjenigen einer Trägerwelle ist, die an der Antenne empfangen wird und mit dieser synchronisiert ist, eine erste Vervielfacherschaltung (638) mit einer variablen Verstärkung, die am Ausgang des Oszillators (637) angeschlossen ist, und eine Steuerschaltung für die Verstärkung des Oszillators umfassen, die diese auf einen nicht Null betragenden Wert einstellen kann, wenn das an den Anschlüssen der Antenne abgegriffene Signal eine Leerstelle aufweist.

13. Funkfrequenzkommunikationsvorrichtung nach Anspruch 12, **dadurch gekennzeichnet, dass** die Steuerschaltung einen Gleichrichter (645), der an die Antenne (61; 71) angeschlossen ist, einen Hüllkurvendetektor (646), der an den Ausgang des Gleichrichters (645) angeschlossen ist, eine Mittelwertschaltung (647), die an den Ausgang des Gleichrichter (645) angeschlossen ist, und eine Subtrahierschaltung (648) umfasst, deren nicht umkehrbarer Anschluss an den Ausgang des Detektors (646) angeschlossen ist, deren umkehrbarer Anschluss an den Ausgang der Mittelwertschaltung (647) angeschlossen ist, und deren Ausgang an die Vervielfacherschaltung (638) angeschlossen ist, um deren Verstärkung zu regeln.

14. Funkfrequenzkommunikationsvorrichtung nach einem der Ansprüche 11, 12 oder 13, **dadurch gekennzeichnet, dass** die Modulationseinrichtungen geeignet sind, das Lückenauffüllsignal zu modulieren, und dass die Anlegeeinrichtungen geeignet sind, an die Anschlüsse der Antenne die Summe des an deren Anschlüssen abgegriffenen Signals und des modulierten Auffüllsignals anzulegen.

15. Funkfrequenzkommunikationssystem mit einer Funkfrequenzsendequelle entsprechend einer Trägerwelle, einem Transponder und einer Vorrichtung nach einem der vorhergehenden Ansprüche.

16. Sendeverfahren zur Steuerung einer Funkfrequenzkommunikationsvorrichtung, die dazu bestimmt ist, mit dem Transponder zu kommunizieren, wobei die Vorrichtung einem der Ansprüche 1 bis 14 entspricht, wobei das Verfahren umfasst:
• Anordnen des Transponders und der Vorrichtung in einem Funkfrequenzmagnetfeld, das im Wesentlichen homogen zum Empfangsbereich der Antenne der Vorrichtung ist;
• Anordnen der Vorrichtung in der Nähe des Transponders, um eine induktive Kopplung zwischen der Vorrichtung und dem Transponder herzustellen, die es ihnen somit ermöglicht, zu kommunizieren;
• Abgreifen und Verarbeiten des Signals an den Anschlüssen der Antenne der Vorrichtung, um in Abhängigkeit von diesem ein Referenzsignal zu erzeugen;
• Modulieren des Referenzsignals; und
• Anlegen des modulierten Signals an die Anschlüsse der Antenne der
